# EUROPEAN PATENT SPECIFICATION

(11) **EP 3 326 948 B1**
(45) Date of publication and mention of the grant of the patent: **11.09.2019**
(21) Application number: 16841731.9
(22) Date of filing: 26.08.2016
(51) Int. Cl.: B65H 57/24, C04B 35/48, D01D 11/04, D01H 13/04, D01D 5/096

(54) **FIBER GUIDE**
FASERFÜHRUNG
GUIDE DE FIBRES

(30) Priority: 28.08.2015 JP 2015169295
(43) Date of publication of application: 30.05.2018
(73) Proprietor: KYOCERA Corporation, Kyoto 612-8501 (JP)
(72) Inventor: INUKAI,Shigemune, Kyoto-shi Kyoto 612-8501 (JP); TOYA,Yuuki, Kyoto-shi Kyoto 612-8501 (JP); NAKASUGA,Minoru, Kyoto-shi Kyoto 612-8501 (JP)
(74) Representative: Viering, Jentschura & Partner mbB Patent- und Rechtsanwälte
(86) International application number: PCT/JP2016/075031
(87) International publication number: WO 2017/038699

(56) References cited:
- EP-A1- 0 397 156
- EP-A1- 2 248 784
- WO-A1-2012/176777
- WO-A1-2015/093531
- JP-A- H10 218 492
- JP-A- H10 297 968
- JP-A- 2001 158 658
- JP-A- 2003 129 349
- US-A- 3 887 387

## Description

### Technical Field

The present disclosure relates to a fiber guide.

### Background Art

In guidance of a fiber, fiber guides having various shapes, called an oiling nozzle, a roller guide, a rod guide, or a traverse guide, are attached to a fiber machine for use. As a material for the fiber guide, alumina ceramics and zirconia ceramics, having an excellent abrasion resistance are used. In the production of the fiber, a fiber feeding speed has been increased year by year in order to improve a production efficiency. With the increase in the fiber feeding speed, the fiber is charged with static electricity, generated by friction owing to contact with a plurality of fiber guides. The fiber which is continued to be fed in an electrostatic state is damaged such as scars or ravels.

In order to solve the problems described above, it is considered that electric conductivity is imparted to the fiber guide. As the fiber guide having the conductivity, for example, Patent Literature 1 describes that ceramics containing, as a main component, a composite oxide of a Group 2a element in the periodic table and Ti is fired in a reducing atmosphere, whereby the conductivity can be imparted. Patent Literature 1 recites, as a specific material, ceramics containing barium titanate or calcium titanate as a main component.

US 3 887 387 A discloses a shaped body essentially consisting of sintered polycrystalline zirconium oxide and 2.5% to 3.5% of at least one oxide of the group consisting of oxides of magnesium, calcium, rare earth metal, cadmium, manganese, cobalt, and titanium, 75% to 95% of said body consisting of cubic crystals, said body having a density greater than 5.5 g/cm³, and the material of said body having a flexural strength of at least 30.

WO 2012/176777 A1 discloses a fiber guide with a yarn-guiding section composed of zirconia ceramics, the zirconia ceramics comprising: first particles containing zirconia and second particles having conductivity.

### Citation List

### Patent Literature

Patent Literature 1: Japanese Unexamined Patent Publication JP-A 10-218492 (1998)

### Summary of Invention

The present invention provides a fiber guide according to claim 1. Further embodiments of the present invention are disclosed in the dependent claims.

### Brief Description of Drawings

FIG. 1 is a perspective view of an oiling nozzle showing one example of a fiber guide of the present disclosure;
FIG. 2 is a perspective view of a roller guide showing one example of the fiber guide of the present disclosure;
FIG. 3 is a perspective view of a rod guide showing one example of the fiber guide of the present disclosure;
FIG. 4 is a perspective view of a traverse guide showing one example of the fiber guide of the present disclosure;
FIG. 5 is a partial cross-sectional view showing the oiling nozzle of the present disclosure;
FIG. 6 is a schematic view showing a surface of a yarn-guiding section of the fiber guide of the present disclosure; and
FIG. 7 is a view observing the roller guide shown in FIG. 2 from an outlined arrow.

### Description of Embodiments

Recently, increase of the fiber feeding speed has been advancing more and more. A fiber guide, therefore, has been required which has an excellent abrasion resistance to be able to endure the recent increase in speed, while having a conductivity which causes less damage to the fiber such as scars or ravels caused by the static electricity.

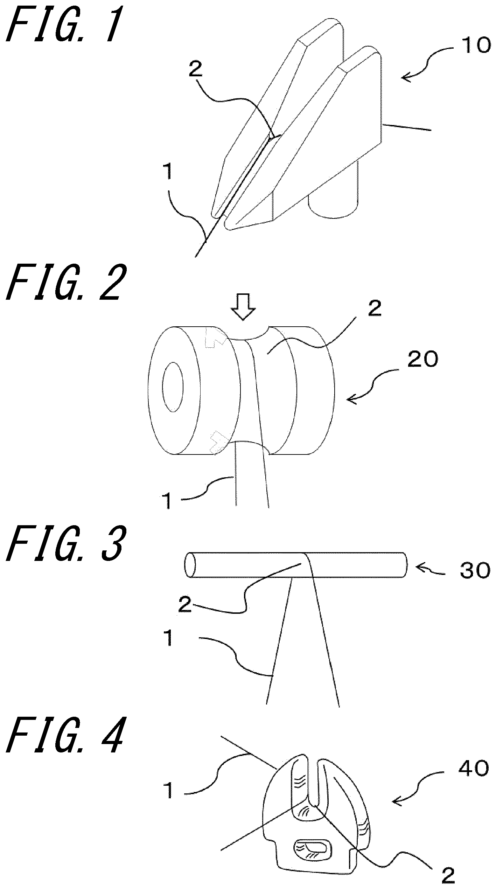

Referring to the drawings, one example of the fiber guides of the present disclosure is explained in detailed below. FIG. 1 is a perspective view of an oiling nozzle showing one example of the fiber guide of the present disclosure. FIG. 2 is a perspective view of a roller guide showing one example of the fiber guide of the present disclosure. FIG. 3 is a perspective view of a rod guide showing one example of the fiber guide of the present disclosure. FIG. 4 is a perspective view of a traverse guide showing one example of the fiber guide of the present disclosure.

Here, the oiling nozzle 10 shown in FIG. 1 is used for attaching oil to a sliding fiber 1. The roller guide 20 shown in FIG. 2 guides the fiber 1 at a V-groove part while it rotates. The rod guide 30 shown in FIG. 3 is used for converging or separating the fiber 1. The traverse guide 40 shown in FIG. 4 is used as a guide when the fiber 1 is wound around the periphery of a cylindrical package.

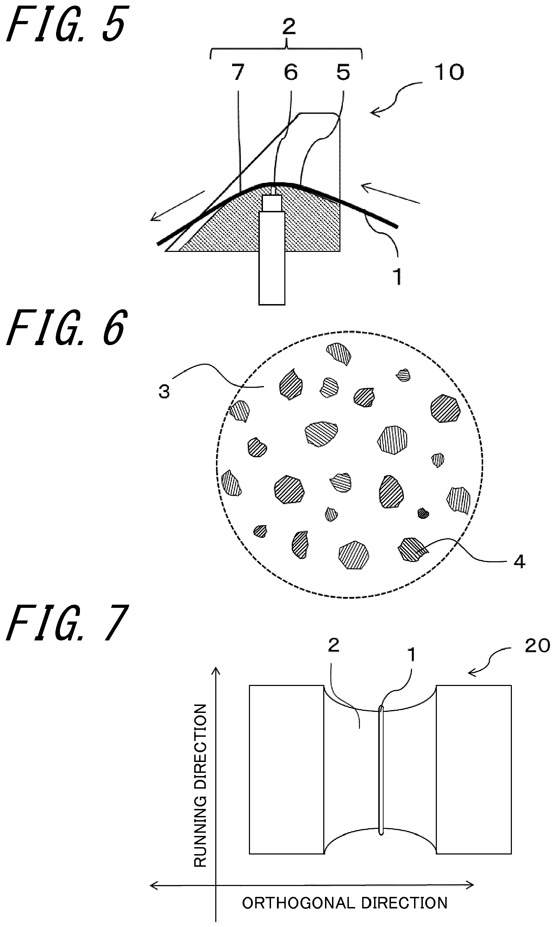

Next, FIG. 5 is a partial cross-sectional view showing the oiling nozzle of the present disclosure. As shown in FIG. 5, the oiling nozzle 10, which is the fiber guide of the present disclosure, comprises a yarn-guiding section 2, which contacts with the fiber 1. The yarn-guiding section 2 comprises an introducing part 5 into which the fiber 1 is introduced, an attaching part 6in which oil is attached to the fiber 1, and a sending part 7 from which the fiber 1 is sent out. Here, the fiber guide in which the yarn-guiding section 2 comprises the introducing part 5 and the sending part 7 is limited to one in which an inlet side of the fiber 1 can be clearly distinguished from an outlet side thereof in the yarn-guiding section 2. The introducing part 5 refers to a part with which the fiber 1 contacts at a place located on this side in a running direction of the fiber 1 from a top of the yarn-guiding section 2 in FIG. 5. The sending part 7 refers to a part with which the fiber 1 contacts at a place located forward in the running direction of the fiber 1 from the top of the yarn-guiding section 2 in FIG. 5.

In the fiber guide of the present disclosure, the yarn-guiding section 2, which contacts with the fiber 1, is formed of zirconia ceramics containing first particles each including zirconia (ZrO₂) and second particles each having the conductivity.

Here, the first particles mainly each contain zirconia, but may contain a stabilizing agent component having an effect of stabilizing zirconia (yttria (Y₂O₃), ceria (CeO₂), calcia (CaO), or magnesia (MgO)), in addition to zirconia. It is noted that the first particles may each contain hafnia (HfO₂) which is difficult to separate from zirconia.

The second particles each comprise an oxide containing one of iron, chromium, cobalt, manganese, nickel, titanium, zinc, and tin.

The zirconia ceramics refers to ceramics containing zirconia, the stabilizing agent component, and hafnia in a total content of 60% by mass or more of 100% by mass of the all components constituting the ceramics.
Hereinafter, the total content of zirconia, the stabilizing agent component and hafnia is simply referred to as "content of zirconia". In descriptions concerning zirconia alone, it is described as "solo zirconia".

In the fiber guide of the present disclosure, the yarn-guiding section 2, which contacts with the fiber 1, is formed of the zirconia ceramics containing the first particles each containing zirconia and the second particles each having the conductivity, and thus the fiber guide has the conductivity and the excellent abrasion resistance.

Here, since the yarn-guiding section 2 contains the second particles each having the conductivity, the fiber guide of the present disclosure has the conductivity. In the fiber guide of the present disclosure, the yarn-guiding section 2 contains the second particles each having the conductivity, and thus has a low surface resistance value, and therefore the static electricity can be removed by the contact with the fiber 1, thus resulting in less damage to the fiber 1 caused by sliding.

The fiber guide has the excellent abrasion resistance, because the zirconia ceramics has 60% by mass or more of a zirconia content; in other words, a large amount of the first particles each containing zirconia are contained. As described above, because the fiber guide of the present disclosure contains a large amount of first particles, dropping out of crystal particles (hereinafter referred to as simply "dropping out of particles") is suppressed due to a high toughness, and the fiber guide has a high hardness. For that reason, the fiber guide of the present disclosure has an excellent abrasion resistance, and exchange frequency is low. Accordingly, the fiber guide of the present disclosure having the conductivity and the excellent abrasion resistance can efficiently produce a fiber having a high quality.

In the fiber guide of the present disclosure, the second particles may each contain an oxide containing at least one of iron, chromium, cobalt, manganese, and nickel. When the structure described above is satisfied, the second particles show a dark color, and thus the yarn-guiding section 2 can have a dark color, and a visibility of a light-colored fiber is improved.

FIG. 6 is a schematic view showing a surface of the yarn-guiding section of the fiber guide of the present disclosure. Specifically, FIG. 6 schematically shows a part of the surface of the yarn-guiding section 2 of the fiber guide, which is observed using a scanning electron microscope (SEM), a metallographical microscope, or the like. As shown therein, the fiber guide of the present disclosure has the first particles 3 each containing zirconia and the second particles 4 each having the conductivity. Although a plurality of first particles 3 exist in places other than the places where the second particles 4 exist, only the places where the second particles 4 exist are shown in hatching in FIG. 6, in order to make the drawing more readable and prevent the drawing from being complicated.

Here, when the first particles 3 and the second particles 4 in the yarn-guiding section 2 are confirmed, the first particles 3 and the second particles 4 can be confirmed by the identification using a JCPDS card from an X-ray chart obtained by measurement using an X-ray diffractometer (XRD).

In addition, the confirmation can also be done by observing the surface of the yarn-guiding section 2 in the fiber guide with SEM, and using an energy dispersive X-ray spectrometer (EDS) or a wavelength dispersive X-ray spectrometer (WDS). Specifically, crystal particles having a high zirconium peak or content and containing the stabilizing agent component are the first particles 3. In addition, crystal particles containing one of iron, chromium, cobalt, manganese, nickel, titanium, zinc, and tin, and oxygen are the second particles 4. It is noted that there is a case where hafnium is further detected in the first particles 3.

Next, the hardness (Vickers hardness), which is an index of the abrasion resistance in the yarn-guiding section 2, can be obtained in accordance with JIS R 1610-2003. The surface resistance value, which is an index of the conductivity in the yarn-guiding section 2, can be measured, for example, by bringing the surface of the yarn-guiding section 2 into contact with an electric resistance measurement apparatus (a surface resistance measurement apparatus SM-8220, manufactured by HIOKI E. E. Corporation), and applying a given voltage thereto. The voltage applied to the surface of the yarn-guiding section 2 during the measurement of the surface resistance value may be set depending on a shape of the yarn-guiding section 2, or the like, and may be, for example, within a range of 10 to 500 V.

The content of the components constituting the yarn-guiding section 2 in the fiber guide can be obtained by determining a content of each element using an ICP (Inductively Coupled Plasma) emission spectrophotometer (ICP) or an X-ray fluorescence apparatus (XRF), and converting the value according to the corresponding oxide.

In the yarn-guiding section 2 of the fiber guide of the present disclosure, an area proportion of the second particles 4 occupied therein may be not less than 17% and not more than 34%, and the number of the second particles in part having an area of 90 µm² may be not less than 150 and not more than 250. When the structure described above is satisfied, the effect of removing the static electricity becomes excellent, because the second particles 4 exist in a dispersion state. The second particles 4, which exist in the dispersion state, are held by the first particles 3 which exist around them, and therefore the dropping out of particles occurs a little even if the fiber 1 is run for a long time in the yarn-guiding section 2. As a result, the fiber guide is obtained in which damage is less given to the fiber and which has the excellent abrasion resistance.

The area proportion of the second particles 4 and the number of second particles 4 in the part having an area of 90 µm² can be calculated, for example, by the following method. First, an arbitrary area in the yarn-guiding section 2 is selected, the selected arbitrary area is observed using SEM at 10000-fold magnification, and a part having an area of 90 µm² (for example, a length in a horizontal direction of 11.5 µm and a length in a vertical direction of 7.8 µm) is photographed. The phrase "an arbitrary area is selected" means that an area where the second particles 4 are aggregated or dispersed, which is not observed in other areas, is not purposely selected, but an area where second particles 4 averagely exist is selected.

Next, an image obtained by extracting only the second particles 4 from the image photographed is prepared. Then, an image analysis is performed applying a technique called particle analysis of image analyzing software "A-ZO KUN" (which is a registered trademark, manufactured by Asahi Kasei Engineering Corporation, and hereinafter, the description of the image analyzing software "A-ZO KUN" refers to the image analyzing software manufactured by Asahi Kasei Engineering Corporation). With respect to the analysis conditions, for example, the brightness of particles may be set at "dark", and the binarization may be set at "automatic". The number of second particles 4 in the part having an area of 90 µm² can be obtained by descriptions above. Similarly, the area proportion of the second particles 4 occupied in the part having an area of 90 µm², which can be obtained by the image analysis of the image in which only the second particles 4 are extracted, refers to an area proportion of the second particles 4 occupied in the fiber guide of the present disclosure.

In addition, in the yarn-guiding section 2 of the fiber guide of the present disclosure, a number proportion of the second particles 4 having a circle equivalent diameter of 0.6 µm or more may be 25% or less. When the structure described above is satisfied, it can be reworded that the number of the second particles 4 which easily drop out is small, and thus the fiber guide has the excellent effect of removing the static electricity and the excellent abrasion resistance. The term "circle equivalent diameter" means a diameter of a circle having the same area as that of the second particle 4.

The number proportion of second particles 4 having a circle equivalent diameter of 0.6 µm or more can be obtained by using the image analyzing software "A-ZO KUN", similar to the case where the area proportion of the second particles 4 and the number of second particles 4 occupied in a part having an area of 90 µm² are obtained.

In the fiber guide of the present disclosure, a ratio of arithmetic mean roughness Ra1 in a running direction of the fiber 1 (hereinafter refers to as simply "running direction") to arithmetic mean roughness Ra2 in an orthogonal direction which is orthogonal to the running direction (hereinafter refers to as simply "orthogonal direction"), Ra1/Ra2, in the yarn-guiding section 2 may be 0.5 or more and less than 1.0.

Here, referring to FIG. 7, a roller guide 20 is taken as an example of the fiber guide, and the arithmetic mean roughness Ra1 in the running direction and the arithmetic mean roughness Ra2 in the orthogonal direction will be described.

As shown in FIG. 7, the running direction refers to a sliding direction of the fiber 1 in the yarn-guiding section 2. The arithmetic mean roughness Ra1 refers to arithmetic mean roughness in the running direction. FIG. 7 shows an example in which the fiber 1 slides at the center of a yarn contact surface, and it can be said that the running direction refers to a rotation direction in the roller guide 20. On the other hand, the orthogonal direction refers to a direction orthogonal to the running direction of the fiber 1 in the yarn-guiding section 2, as shown in FIG. 7. The arithmetic mean roughness Ra2 refers to arithmetic mean roughness in the orthogonal direction.

When the ratio of the arithmetic mean roughness Ra1 to the arithmetic mean roughness Ra2, Ra1/Ra2 is 0.5 or more and less than 1.0, the fiber guide of the present disclosure can further suppress the damage to the fiber 1. Owing to surface texture of the yarn-guiding section 2 of the fiber guide of the present disclosure, sliding locations of the fiber 1 are appropriately changed and the sliding of the fiber 1 at the same place less occurs, while the fiber slide in a state in which the fiber is brought into contact with the guide in the small contact area; as a result, the damage to the fiber 1 can be further suppressed as described above.

The arithmetic mean roughness Ra1 and the arithmetic mean roughness Ra2 can be measured in accordance with JIS B 0601 (2001). With respect to the measurement conditions, for example, a measurement length may be set at 0.2 to 5.0 mm, a cut-off value may be set at 0.02 to 0.8 mm, a diameter of a contact needle may be set at 1 to 10 µm, and a scanning speed of the contact needle may be set at 0.1 to 10 mm/second. In the yarn-guiding section 2, the measurement is performed at 5 places in the running direction and 5 places in the orthogonal direction, respectively, and mean values of the values obtained in this measurement are defined as arithmetic means roughness Ra1 and Ra2, respectively. As in the oiling nozzle 10, in the case of a fiber guide in which the yarn-guiding section 2 comprises the introducing part 5 and the sending part 7, the measurement is performed at 3 places in each of the introducing part 5 and the sending part 7 in the running direction and the orthogonal direction, and a mean value of the values obtained in this measurement may be defined as the arithmetic mean roughness Ra1 and Ra2.

When the arithmetic mean roughness Ra2 in the orthogonal direction is not less than 0.036 µm and not more than 0.060 µm in the fiber guide of the present disclosure, the damage to the fiber 1 can be much more suppressed.

In the fiber guide of the present disclosure, skewness Rsk, which is obtained from a roughness curve in the running direction of the fiber 1, may be less than 0 in the yarn-guiding section 2. Here, the skewness obtained from the roughness curve refers to an index showing a ratio of a mountain region defined relative to a center line, which is a mean roughness height, to a valley region defined relative to the center line. When the skewness is less than 0, it shows that the mountain region is larger than the valley region. When the structure described above is satisfied, the surface texture in the running direction is expressed as a large mountain region, and the static electricity can be easily removed because the mountain region which contacts with the yarn contact surface is large when the fiber 1 slides, and the effect of removing the static electricity is excellent.

Like in the case where the arithmetic mean roughness Ra1 and Ra2 is obtained, the skewness obtained from the roughness curve can be obtained by performing the measurement in accordance with JIS B 0601 (2001).

In the yarn-guiding section 2 of the fiber guide of the present disclosure, arithmetic mean roughness Ra3 of the introducing part 5 in the running direction of the fiber 1 may be smaller than arithmetic mean roughness Ra4 of the sending part 7 in the running direction of the fiber 1. When the structure described above is satisfied, the contact area with the fiber 1 is increased in the introducing part 5, and therefore the static electricity can be easily removed. In addition, the contact area with the fiber 1 is decreased in the sending part 7, and therefore the fiber 1 can be smoothly sent out.

The arithmetic mean roughness Ra3 of the introducing part 5 in the running direction and the arithmetic mean roughness Ra4 of the sending part 7 in the running direction can be measured in accordance with JIS B 0601 (2001). First, the measurement is performed in the running direction at 3 places in each of the introducing part 5 and the sending part 7. Then, the mean value of the values obtained in this measurement is defined as the arithmetic mean roughness Ra3 and Ra4. The measurement conditions may be the same as in the case where the arithmetic mean roughness Ra1 and Ra2 is obtained, as described above.

Next, one example of a method of producing the fiber guide of the present disclosure will be described. In the fiber guide of the present disclosure, it is enough that at least the yarn-guiding section 2 is formed of the zirconia ceramics, but in the following description, a method of producing a whole fiber guide formed of the zirconia ceramics will be described.

First, a desired amount of zirconia powder containing a stabilizing agent component and having a mean particle size of 0.3 to 1.0 µm (hereinafter referred to as simply "zirconia powder") is weighed. Then, a solvent is added to the zirconia powder, and the powder is pulverized using a ball mill or a bead mill until the mean particle size reaches 0.2 to 0.5 µm to obtain a first slurry. When the stabilizing agent component contained in the zirconia powder is yttria, the yttria content is about not less than 1.5 by mole and not more than 4.0% by mole based on the total 100% by mole of the solo zirconia and yttria.

Next, a desired amount of conductive raw material powder having a mean particle size of 0.3 to 2.0 µm (mixed powder of iron oxide powder, chromium oxide powder, and titanium oxide powder) is weighed. Then, a solvent is added to the conductive raw material powder, the powder is pulverized using a ball mill or a bead mill until the mean particle size reaches 0.1 to 0.5 µm to obtain a second slurry. The conductive raw material powder is weighed so that the amount of the zirconia powder is 60 parts by mass or more based on the total 100 parts by weight of the zirconia powder and the conductive raw material powder.

Next, an anionic dispersing agent is added to the second slurry. Then, the second slurry containing the anionic dispersing agent is mixed with the first slurry while the second slurry is added to the first slurry, to which a binder is further added and mixed, and then the mixture is spray-dried using a spray dryer to form granules. Here, when the anionic dispersing agent is added to the second slurry, the second particles 4 can exist in a dispersion state without aggregation. When the additive amount of the anionic dispersing agent is adjusted to 0.1 to 1.0 part by mass based on the total 100 parts by mass of the zirconia powder and the conductive raw material powder, the number of the second particles 4 in a part having an area of 90 µm² in the yarn-guiding section 2 can be not less than 150 and not more than 250.

Next, the resulting granules, a thermoplastic resin, and wax are charged into a kneader, and are kneaded while being heated to obtain a green body. Then, the obtained green body is charged into a pelletizer to obtain pellets which serves as a raw material for injection molding. It is possible to use, as the thermoplastic resin charged into the kneader, an ethylene-vinyl acetate copolymer, polystyrene, an acrylic resin, and the like. The additive amount of the thermoplastic resin and wax may be adjusted to about 10 to 25 parts by mass based on the total 100 parts by mass of the zirconia powder and the conductive raw material powder. With respect to the kneading conditions in the kneader, the heating temperature may be set at 100 to 170°C and the kneading time may be set at 0.5 to 3 hours.

Next, the pellets are charged into an injection molding machine comprising a mold whose shape is matched with that of the fiber guide, then injection-molding is performed, and a runner located in the vicinity of an input port of the mold, is cut to obtain a molded article.

Next, the molded article is degreased, and then is fired while being kept at a temperature of 1300 to 1500°C for 1 to 3 hours in the air atmosphere to obtain a sintered compact. The obtained sintered compact is subject to barrel polishing, whereby a fiber guide of the present disclosure can be obtained. In order to adjust the number percent of the second particles 4 having a circle equivalent diameter of 0.6 µm or more to 25% or less, the molded article may be fired at a temperature of 1300 to 1450°C.

In order to change the arithmetic mean roughness Ra1 in the running direction and the arithmetic mean roughness Ra2 in the orthogonal direction in the yarn-guiding section 2 to arbitrary values, it is enough to perform the following polishing in the fiber guide.
First, the fiber guide is fixed, a string is slidingly contacted with the yarn-guiding section 2 in the fiber guide, and the yarn-guiding section 2 is polished by sliding the string in the running direction at a feeding speed of 300 m/minute while oil in which a polishing agent is dispersed is supplied to the yarn-guiding section 2. Here, in this polishing, a nylon string having a diameter of 0.5 to 10 mm, and a polishing agent containing diamond abrasive grains with a mean particle size of 0.5 to 6 µm are used.

In the case of rotatable fiber guide such as the roller guide 20, the string may be slidingly contacted with the yarn-guiding section 2 while the fiber guide itself is rotated. According to this polishing method, yarn-guiding section 2 is polished by slidingly contacting the string in the running direction of the fiber 1, and therefore the polishing is completed so that the surface roughness in the orthogonal direction is smaller than the surface roughness in the running direction. When the polishing according to this polishing method is performed for 1 to 8 minutes, the ratio of the arithmetic mean roughness Ra1 in the running direction to the arithmetic mean roughness Ra2 in the orthogonal direction, Ra1/Ra2, in the yarn-guiding section 2 can be adjusted to 0.5 or more and less than 1.0.

In order to adjust the arithmetic mean roughness Ra2 in the orthogonal direction to not less than 0.036 µm and not more than 0.060 µm, the polishing according to the polishing method described above may be performed for 3 to 5 minutes.

In order to adjust the skewness Rsk in the running direction, which is obtained from the roughness curve, to less than 0, it is enough to use a polishing agent having a mean particle size of 0.5 to 2 µm for the polishing of the year contact surface described above. When a polishing agent having a small particle size is used, the year contact surface can be polished so as to perform fine grinding along the running direction, and thus the skewness Rsk can be adjusted to less than 0.

In the polishing method described above, when the fiber guide is fixed so that the string is slidingly contacted with only the introducing part 5 and the sending part 7 of the yarn-guiding section 2, and the polishing is performed while adjusting the mean particle size of the polishing agent and the polishing time, then the arithmetic mean roughness Ra3 of the introducing part 5 in the running direction and the arithmetic mean roughness Ra4 of the sending part 7 in the running direction can be adjusted to arbitral levels.

It is noted that the present disclosure is not limited to the embodiments described above, and various modifications and improvements are possible within the scope of the present disclosure.

### Example 1

Fiber guides having an oiling nozzle shape were produced from different materials, and a sliding test was performed.

First, zirconia powder having a mean particle size of 0.7 µm (containing a stabilizing agent component) was prepared, and the zirconia powder was weighed so that the zirconia content was 60% by mass of 100% by mass of the all components forming a ceramic. Then, the powder was put in a ball mill together with water which was a solvent, and was pulverized to obtain a first slurry. As the zirconia powder, powder in which a stabilizing agent component was yttria, and the yttria content was 2.5% by mole of the total 100% by mole of the solo zirconia and the yttria was used.

Conductive raw material powder having a mean particle size of 1.1 µm (mixed powder containing iron oxide powder, chromium oxide powder, and titanium oxide powder in a mass ratio of 88:10:2) was prepared, and the conductive raw material powder was weighed so that the total content of the iron oxide, chromium oxide, and titanium oxide was 40% by mass of 100% by mass of the all components constituting the ceramics. Then, the powder was put in a ball mill together with water which was a solvent, and was pulverized to obtain a second slurry.

Next, an anionic dispersing agent was added to the second slurry in an amount of 0.5 part by mass based on the total 100 parts by mass of the zirconia powder and the conductive raw material powder. Then, the second slurry containing the anionic dispersing agent was mixed with the first slurry while the second slurry was added to the first slurry, to which a binder was further added and mixed, and then the mixture was spray-dried using a spray dryer to obtain granules.

Next, the obtained granule, a thermoplastic resin, and wax were put in a kneader, and the mixture was kneaded while they were heated to obtain a green body. As the thermoplastic resin, an ethylene-vinyl acetate copolymer, polystyrene, and an acrylic resin were used. The additive amount of the thermoplastic resin and wax was 20 parts by mass based on the total 100 parts by mass of the zirconia powder and the conductive raw material powder. With respect to the kneading conditions, the kneading time was adjusted to 0.5 hour while the temperature was kept at 140°C. The obtained green body was charged into a pelletizer to obtain pellets which served as a raw material for injection molding.

Next, the pellets were thrown into an injection molding machine comprising a mold having an oiling nozzle shape, and the injection molding was performed. After that, a runner located in the vicinity of an input port of the mold, was cut to obtain a molded article.

Next, the molded article was put in a dryer and dried, and then was fired while being kept at a temperature of 1500°C for about 1 hour in the air atmosphere to obtain a sintered compact. The obtained sintered compact was subject to barrel polishing to obtain a fiber guide of the present disclosure (Sample No. 1).

As a comparative example, an oiling nozzle formed of barium titanate ceramics was produced. As a production method, first, a mixed powder containing 95% by mass or more of barium titanate powder and the total 5% by mass of alumina powder and silica powder was used as a raw material, to which a binder such as polyvinyl alcohol or ethylene glycol was added in a necessary amount, and the mixture was wet-mixed. After that, the mixture was spray-dried using a spray dryer to obtain granules. The obtained granules were press-molded, and the pressed article was subjected to cutting to obtain a molded article. After that, the molded article was fired at 1300°C in a reducing atmosphere to obtain a fiber guide formed of barium titanate ceramics (Comparative Example: Sample No. 2).

With respect to each sample, the Vickers hardness and the surface resistance value of the yarn-guiding section were measured, and the measured values were shown in Table 1. First, the Vickers hardness of the yarn-guiding section was measured in accordance with JIS R 1610-2003. The surface resistance value of the yarn-guiding section was measured by bringing a surface of the yarn-guiding section in each sample into contact with an electric resistance measurement apparatus (a surface resistance measurement apparatus SM-8220 manufactured by HIOKI E. E. Corporation), and applying a voltage of 10 V to the surface.

The sliding test of the yarn-guiding section was performed in which each sample was used, a fiber formed of polyester having a thickness of 75 d was used, and while the fiber was attached to oil at an attaching part of each sample, the fiber was slid at a tensile force of 20 g and a speed of 4000 m/minute for 700 hours. After the sliding test, a wear state of the yarn-guiding section of each sample was confirmed. The results are shown in Table 1.

**[Table 1]**

| Sample No. | Vickers hardness (GPa) | Surface resistance (Ω) | Depth of wear |
|---|---|---|---|
| 1 | 12 | 10^6 | shallow |
| 2 | 7 | 10^6 | deep |

As shown in Table 1, although the fiber of Sample No. 2 was less damaged after the sliding, the depth of wear was deep in the yarn-guiding section. On the other hand, in Sample No. 1, the depth of wear was shallow in the yarn-guiding section and the fiber was less damaged after the sliding. From the results above, it was understood that when the yarn-guiding section which contacted with the fiber, was formed of the zirconia ceramics containing the first particles each containing zirconia and the second particles each having the conductivity, the fiber guide had the excellent abrasion resistance while it had the conductivity.

### Example 2

Fiber guides having an oiling nozzle shape which have different area proportions of the second particles occupied in the yarn-guiding section and different numbers of the second particles in the part having an area of 90 µm², were produced, and the sliding test was performed, whereby the times taken until the damage was confirmed to the fiber were compared.

Sample Nos. 3 to 14 were produced in the same manner as in the method of Sample No. 1 in Example 1 using the same zirconia powder and conductive raw material powder as in Example 1, except that the iron oxide, chromium oxide, and titanium oxide were weighed so that the total content thereof in 100% by mass of the all components constituting the ceramics was as shown in Table 2, and the additive amount of the dispersing agent was a value shown in Table 2. It is noted that Sample No. 9 was the same sample as Sample No. 1 in Example 1.

Next, an arbitrary region in the yarn-guiding section was selected, the region was observed at 10000-fold magnification using SEM, and a part having an area of 90 µm² (a length in a horizontal direction of 11.5 µm and a length in a vertical direction of 7.8 µm) was photographed. Then, an image obtained by extracting only the second particles from the photographed image was prepared, and an image analysis was performed by applying a technique called particle analysis of image analyzing software "A-ZO KUN", whereby an area proportion of the second particles (area proportion in Table 2), and the number of second particles in the part having an area of 90 µm² (the number in part having area of 90 µm² in Table 2) were obtained. With respect to the analysis conditions, the brightness of the particles was at "dark", and the binarization was set at "automatic".

Next, using each sample, the sliding test of the yarn-guiding section was performed in which, using a fiber formed of polyester having a thickness of 75 d, while the fiber was attached to oil at an attaching part of each sample, the fiber was slid at a tensile force of 20 g and a speed of 4000 m/minute, and the appearance of the fiber was confirmed every 50 hours and the time at which the damage of scars or ravels was confirmed to the fiber was checked. The results are shown in Table 2.

**[Table 2]**

| Sample No. | Total content of conductive component (% by mass) | Amount of dispersing agent added (part by mass) | Area proportion (%) | Number in part having area of 90 µm² (particles) | Time confirmed |
|---|---|---|---|---|---|
| 3 | 16.7 | - | 15 | 128 | 750 |
| 4 | 16.7 | 0.3 | 15 | 185 | 850 |
| 5 | 16.7 | 1 | 15 | 240 | 800 |
| 6 | 18.9 | 0.35 | 17 | 192 | 1050 |
| 7 | 30.0 | 0.4 | 27 | 202 | 1200 |
| 8 | 37.8 | 0.45 | 34 | 209 | 1000 |
| 9 | 40.0 | 0.5 | 36 | 225 | 800 |
| 10 | 30.0 | - | 27 | 140 | 900 |
| 11 | 30.0 | 0.1 | 27 | 150 | 1000 |
| 12 | 30.0 | 1 | 27 | 250 | 1050 |
| 13 | 30.0 | 1.2 | 27 | 260 | 850 |
| 14 | 40.0 | 1.2 | 36 | 269 | 700 |

As shown in Table 2, the time at which the damage was confirmed was 1000 hours or longer in Sample Nos. 6 to 8, 11, and 12. From the results, it was understood that when, in the yarn-guiding section, the area proportion of the second particles was not less than 17% and not more than 34% and the number of the second particle in the part having an area of 90 µm² was not less than 150 and not more than 250, the fiber was further less damaged.

### Example 3

Oiling nozzles having different number proportions of second particles having a circle equivalent diameter of 0.6 µm or more were produced, the sliding test was performed, and the times taken until the damage was confirmed to the fiber were compared. Sample Nos. 15 to 17 were produced in the same manner as the production method of Sample No. 7 in Example 2 except that the firing temperature was changed to a temperature shown in Table 3. It is noted that No. 17 is the same sample as Sample No. 7 in Example 2.

The image analysis was performed by applying a technique called particle analysis of image analyzing software "A-ZO KUN", similar to the case in which the area proportion of the second particles and the number of second particles in the part having an area of 90 µm² were obtained in Example 2, whereby a number proportion of second particles having a circle equivalent diameter of 0.6 µm or more of the second particles (number proportion in Table 3) was obtained.

The sliding test and the confirmation of the fiber were performed in the same manner as in Example 2. The results are shown in Table 3.

**[Table 3]**

| Sample No. | Number proportion of particles with a diameter of 0.6 µm or more (%) | Firing temperature (°C) | Time confirmed |
|---|---|---|---|
| 15 | 12 | 1350 | 1400 |
| 16 | 25 | 1450 | 1300 |
| 17 | 27 | 1500 | 1200 |

From the results of Table 3, it was understood that, in the yarn-guiding section, when the number proportion of the second particles having a circle equivalent diameter of 0.6 µm or more was 25% or less, the effect of removing the static electricity was excellent.

### Example 4

Fiber guides having a roller guide shape which have different ratios of the arithmetic mean roughness Ra1 in the running direction to the arithmetic mean roughness Ra2 in the orthogonal direction, Ra1/Ra2 in the yarn-guiding section were produced, the sliding test was performed, and the times taken until the damage was confirmed to the fiber were compared. Sample Nos. 18 to 27 were produced in the same manner as the production method of Sample No. 15 in Example 3 except that a molded article having a roller guide shape was formed using an injection molding machine comprising a mold having a roller guide shape, and the following polishing was performed to a sintered compact after the barrel polishing. First, the sintered compact having the roller guide shape was rotatably fixed. Next, a string was slidingly contacted with the yarn-guiding section in the sintered compact, and the yarn-guiding section was polished by slidingly contacting the string at a feeding speed of 300 m/minute for a polishing time shown in Table 4, while oil in which a polishing agent was dispersed was supplied to the yarn contact surface. In this polishing, a nylon string having a diameter of 3 mm and a polishing agent containing diamond abrasive grains with a mean particle size of 3 µm were used. It is noted that Sample No. 27 was Sample No. 15 in Example 3 whose oiling nozzle shape was changed to the roller guide shape.

In each sample, arithmetic mean roughness Ra1 in the running direction in the yarn-guiding section and arithmetic mean roughness Ra2 in the orthogonal direction in the yarn-guiding section were measured in accordance with JIS B 0601 (2001). With respect to the measurement conditions, a measurement length was set at 1.5 mm, a cutoff value was set at 0.25 mm, a diameter of a contact needle was set at 2 µm, and a scanning speed of the contact needle was set at 0.5 mm/second. The measurement was performed at 5 parts in each of the running direction and the orthogonal direction, and mean vales obtained from the measurement were defined as the arithmetic mean roughness Ra1 and arithmetic mean roughness Ra2, respectively.

Then, using each sample, the sliding test was performed in which the yarn-guiding section was slid using a fiber formed of polyester having a thickness of 75 d at a tensile force of 20 g and a speed of 4000 m/minute, and the appearance of the fiber was confirmed every 10 hours and the time at which the damage of scars or ravels was confirmed to the fiber was checked. The results are shown in Table 4. Here, the significant difference in the time at which the damage was confirmed to the fiber between Sample No. 27 and sample No. 15 in Example 3 results from whether or not the oil is applied to the fiber in the sliding test.

**[Table 4]**

| Sample No. | Polishing time (minute) | Ra1 (µm) | Ra2 (µm) | Ra1/Ra2 | Time confirmed |
|---|---|---|---|---|---|
| 18 | 10 | 0.030 | 0.028 | 1.07 | 460 |
| 19 | 9 | 0.031 | 0.031 | 1.00 | 480 |
| 20 | 7.5 | 0.032 | 0.033 | 0.97 | 560 |
| 21 | 5 | 0.034 | 0.036 | 0.94 | 620 |
| 22 | 4 | 0.039 | 0.049 | 0.80 | 640 |
| 23 | 3 | 0.042 | 0.060 | 0.70 | 600 |
| 24 | 2 | 0.043 | 0.066 | 0.65 | 530 |
| 25 | 1 | 0.045 | 0.090 | 0.50 | 500 |
| 26 | 0.5 | 0.048 | 0.108 | 0.44 | 450 |
| 27 | 0 | 0.052 | 0.126 | 0.41 | 380 |

From the results shown in Table 4, in Sample Nos. 20 to 25, the time at which the damage was confirmed was 500 hours or longer. From the results, it was understood that in the yarn-guiding section when the ratio of the arithmetic mean roughness Ra1 to the arithmetic mean roughness Ra2, Ra1/Ra2 was 0.5 or more and less than 1.0, the fiber was less damaged.

In particular, it was understood that in Sample Nos. 21 to 23 having arithmetic mean roughness Ra2 of not less than 0.036 µm and not more than 0.060 µm, the fiber was further less damaged.

### Example 5

Fiber guides having a roller guide shape in which positive and negative of the skewness Rsk obtained from the roughness curve in the running direction in the yarn-guiding section, were different from each other, were produced, the sliding test was performed, and the times taken until the damage was confirmed to the fiber were compared. Sample Nos. 28 and 29 were produced in the same manner as in the production method of Sample No. 22 in Example 4 except that a polishing agent containing diamond abrasive grains with a mean particle size shown in Table 5 was used. It is noted that Sample No. 28 is the same sample as Sample No. 22 in Example 4.

Next, the skewness RSk of each sample was measured in the same manner as in Example 4. The sliding test of the fiber and the confirmation were performed in the same manner as in Example 4. The results are shown in Table 5. In Table 5, "positive" shows the skewness value of more than 0, and "negative" shows the skewness value of less than 0.

**[Table 5]**

| Sample No. | Mean diameter of abrasive grain (µm) | Rsk | Time confirmed |
|---|---|---|---|
| 28 | 3 | positive | 640 |
| 29 | 1.5 | negative | 670 |

From the results in Table 5, it was understood that when the skewness Rsk in the running direction was less than 0 in the yarn-guiding section, the fiber was less damaged.

### Example 6

Fiber guides having an oiling nozzle shape which different magnitude relationships between the arithmetic mean roughness Ra3 of the introducing part in the running direction and the arithmetic mean roughness Ra4 of the sending part in the running direction, were produced, the sliding test was performed, and the times taken until the damage was confirmed to the fiber were compared.

Sample Nos. 30 and 31 were produced in the same manner as in the production method of Sample No. 15 in Example 3 except that the sintered compact having the oiling nozzle after the barrel polishing was fixed so that the string was slidingly contacted with only the introducing part and the sending part in the yarn-guiding section, and the polishing was performed while the mean particle size of the polishing agent and the polishing time were controlled.

The arithmetic mean roughness Ra3 of the introducing part in the running direction and the arithmetic mean roughness Ra4 of the sending part in the running direction in the yarn-guiding section of each sample were measured in accordance with JIS B 0601 (2001). First, measurement in the running direction was performed at 3 places in each of the introducing part and the sending part. Mean vales obtained from the measurement were defined as the arithmetic mean roughness Ra3 and arithmetic mean roughness Ra4, respectively. The measurement conditions were the same as in the measurement in which the arithmetic mean roughness Ra1 and the arithmetic mean roughness Ra2 were obtained in Example 4.

The sliding test of the fiber and the confirmation were performed in the same manner as in Example 2. The results are shown in Table 6.

**[Table 6]**

| Sample No. | Ra3 | Ra4 | Time confirmed |
|---|---|---|---|
| | (µm) | (µm) | |
| 30 | 0.1 | 0.2 | 1500 |
| 31 | 0.2 | 0.2 | 1400 |

From Table 6, it was understood that when the arithmetic mean roughness Ra3 was smaller than the arithmetic mean roughness Ra4 in the yarn-guiding section, the effect of removing the static electricity was excellent and the fiber was less damaged.

### Reference Signs List

- 1:: Fiber
- 2:: Yarn-guiding section
- 3:: First particle
- 4:: Second particle
- 5:: Introducing part
- 6:: Attaching part
- 7:: Sending part
- 10:: Oiling nozzle
- 20:: Roller guide
- 30:: Rod guide
- 40:: Traverse guide

## Claims

1. A fiber guide, comprising:
a yarn-guiding section (2) that contacts with a fiber (1), and composed of zirconia ceramics, the zirconia ceramics comprising:
first particles (3), each containing zirconia;
and second particles (4), each having conductivity,
wherein the yarn-guiding section (2) has a ratio, Ra1/Ra2, which is 0.5 or more and less than 1.0 where Ra1 is arithmetic mean roughness in a running direction of the fiber (1), and Ra2 is arithmetic mean roughness in an orthogonal direction which is orthogonal to the running direction.

2. The fiber guide according to claim 1, wherein the second particles (4) each contain an oxide of at least one of iron, chromium, cobalt, manganese, and nickel.

3. The fiber guide according to claim 1 or 2, wherein the yarn-guiding section (2) has:
an area proportion of the second particles (4) which is not less than 17% and not more than 34%,
and a number of the second particles (4) in a part having an area of 90 µm² which is not less than 150 and not more than 250.

4. The fiber guide according to any of claims 1 to 3, wherein a number proportion of the second particles (4) which has a circle equivalent diameter of 0.6 µm or more of the second particles (4) is 25% or less.

5. The fiber guide according to any of claims 1 to 4, wherein the arithmetic mean roughness Ra2 in the orthogonal direction is not less than 0.036 µm and not more than 0.060 µm.

6. The fiber guide according to any of claims 1 to 5, wherein the yarn-guiding section (2) has skewness, Rsk, which is obtained from a roughness curve in a running direction of the fiber (1) and which is smaller than 0.

7. The fiber guide according to any of claims 1 to 6, wherein the yarn-guiding section (2) comprises an introducing part (5) and a sending part (7), and arithmetic mean roughness Ra3 of the introducing part (5) in a running direction of the fiber (1) is smaller than arithmetic mean roughness Ra4 of the sending part (7) in the running direction.

## Patentansprüche

1. Eine Faserführung, aufweisend:
einen Garnführungsabschnitt (2), der eine Faser (1) kontaktiert und aus Zirkonoxidkeramik zusammengesetzt ist, wobei die Zirkonoxidkeramik aufweist:
erste Partikel (3), die jeweils Zirkonoxid enthalten,
und zweite Partikel (4), die jeweils eine Leitfähigkeit aufweisen,
wobei der Garnführungsabschnitt (2) ein Verhältnis Ra1/Ra2 aufweist, das 0,5 oder mehr und weniger als 1,0 beträgt, wobei Ra1 der arithmetische Mittelrauwert in einer Laufrichtung der Faser (1) ist und Ra2 der arithmetische Mittelrauwert in einer orthogonalen Richtung ist, die orthogonal zur Laufrichtung ist.

2. Die Faserführung gemäß Anspruch 1, wobei die zweiten Partikel (4) jeweils ein Oxid von mindestens einem von Eisen, Chrom, Kobalt, Mangan und Nickel enthalten.

3. Die Faserführung gemäß Anspruch 1 oder 2, wobei der Garnführungsabschnitt (2) aufweist:
einen Flächenanteil der zweiten Partikel (4), der nicht kleiner als 17% und nicht größer als 34% ist,
und eine Anzahl der zweiten Partikel (4) in einem Teil mit einer Fläche von 90 µm², die nicht kleiner als 150 und nicht größer als 250 ist.

4. Die Faserführung gemäß irgendeinem der Ansprüche 1 bis 3, wobei ein Zahlenanteil der zweiten Partikel (4) mit einem kreisäquivalenten Durchmesser von 0,6 µm oder mehr der zweiten Partikel (4) 25% oder weniger beträgt.

5. Die Faserführung gemäß irgendeinem der Ansprüche 1 bis 4, wobei der arithmetische Mittelrauwert Ra2 in der orthogonalen Richtung nicht kleiner als 0,036 µm und nicht größer als 0,060 µm ist.

6. Die Faserführung gemäß irgendeinem der Ansprüche 1 bis 5, wobei der Garnführungsabschnitt (2) eine Schiefe, Rsk, aufweist, die aus einer Rauheitskurve in einer Laufrichtung der Faser (1) erhalten wird und kleiner als 0 ist.

7. Die Faserführung gemäß irgendeinem der Ansprüche 1 bis 6, wobei der Garnführungsabschnitt (2) einen Einführungsteil (5) und einen Sendeteil (7) aufweist, und der arithmetische Mittelrauwert Ra3 des Einführungsteils (5) in einer Laufrichtung der Faser (1) kleiner als der arithmetische Mittelrauwert Ra4 des Sendeteils (7) in der Laufrichtung ist.

## Revendications

1. Un guide de fibres, comportant :
une section guide-fil (2) qui est en contact avec une fibre (1) et composée de céramique de zircone, la céramique de zircone comprenant :
des premières particules (3), contenant chacune de la zircone ;
et des deuxièmes particules (4), ayant chacune une conductivité,
dans lequel la section guide-fil (2) a un rapport Ra1/Ra2, qui est de 0,5 ou plus et inférieur à 1,0, où Ra1 est la rugosité arithmétique moyenne dans un sens de marche de la fibre (1), et Ra2 est la rugosité arithmétique moyenne dans une direction orthogonale qui est orthogonale au sens de marche.

2. Le guide de fibres selon la revendication 1, dans lequel les deuxièmes particules (4) contiennent chacune un oxyde d'au moins un parmi le fer, le chrome, le cobalt, le manganèse et le nickel.

3. Le guide de fibres selon la revendication 1 ou 2, dans lequel la section guide-fil (2) présente :
une proportion de surface des deuxièmes particules (4) qui n'est pas inférieure à 17% ni supérieure à 34%,
et un nombre des deuxièmes particules (4) dans une partie ayant une surface de 90 µm² qui n'est pas inférieur à 150 ni supérieur à 250.

4. Le guide de fibres selon l'une quelconque des revendications 1 à 3, dans lequel une proportion de nombre des deuxièmes particules (4) avec un diamètre circulaire équivalent de 0,6 µm ou plus des deuxièmes particules (4) est de 25% ou moins.

5. Le guide de fibres selon l'une quelconque des revendications 1 à 4, dans lequel la rugosité arithmétique moyenne Ra2 dans la direction orthogonale n'est pas inférieure à 0,036 µm ni supérieure à 0,060 µm.

6. Le guide de fibres selon l'une quelconque des revendications 1 à 5, dans lequel la section guide-fil (2) présente une obliquité, Rsk, qui est obtenue d'une courbe de rugosité dans un sens de marche de la fibre (1) et qui est inférieure à 0.

7. Le guide de fibres selon l'une quelconque des revendications 1 à 6, dans lequel la section guide-fil (2) comprend une partie d'introduction (5) et une partie d'envoi (7), et la rugosité arithmétique moyenne Ra3 de la partie d'introduction (5) dans un sens de marche de la fibre (1) est inférieure à la rugosité arithmétique moyenne Ra4 de la partie d'envoi (7) dans la direction de déplacement.
